# FASCICULE DE BREVET EUROPEEN

(11) **EP 2 363 316 B1**
(45) Date de publication et mention de la délivrance du brevet: **03.12.2014**
(21) Numéro de dépôt: 11290101.2
(22) Date de dépôt: 22.02.2011
(51) Int. Cl.: B60N 2/24, B60N 2/30, B60N 2/12, B60N 2/44

(54) **Siège de véhicule automobile**
Autositz
Vehicle seat

(30) Priorité: 24.02.2010 FR 1000768; 11.03.2010 FR 1000989; 11.06.2010 FR 1002492; 30.09.2010 FR 1003893
(43) Date de publication de la demande: 07.09.2011
(73) Titulaire: Centre d'etude et de recherche pour l'automobile, 51100 Reims (FR)
(72) Inventeur: Airault, Jean-Yves, 56430 Concoret (FR); Brice, Patrick, 54110 Hudiviller (FR); Georges, Laurent, 08190 Roizy (FR); Gevaert, Guillaume, 62179 Wissant (FR); Patte, Damien, 51490 Epoye (FR)
(74) Mandataire: Sayettat, Julien Christian

(56) Documents cités:
- WO-A1-02/092382
- WO-A1-2009/094756
- WO-A2-2006/065796
- DE-A1-102008 063 616
- DE-C1- 19 962 424
- DE-U1-202009 013 530
- FR-A1- 2 886 590
- FR-A1- 2 903 940
- FR-A1- 2 914 593
- FR-A1- 2 916 170
- FR-A1- 2 917 679
- US-A- 6 139 104
- US-A1- 2009 058 149

## Description

L'invention concerne un siège de véhicule automobile.

Il est connu de réaliser un siège de véhicule automobile comprenant :
- un support destiné à être fixé solidairement au sol dudit véhicule,
- une embase saillante vers le haut et solidaire de l'arrière dudit support,
- un brancard de dossier monté en rotation sur la partie supérieure de ladite embase selon un premier axe transversal, afin de permettre l'actionnement dudit dossier entre une position sensiblement verticale d'utilisation et une position sensiblement horizontale de rabattement,
- un brancard d'assise monté en rotation par rapport audit brancard de dossier selon un deuxième axe transversal disposé au-dessus dudit premier axe,
- une bielle avant dont les extrémités sont respectivement montées en rotation selon un troisième axe transversal à l'avant dudit brancard d'assise et selon un quatrième axe transversal à l'avant dudit support, ledit dossier étant actionnable au moins selon deux modes :
- d'une part entre les positions d'utilisation et de rabattement, par actionnement dudit brancard de dossier en rotation vers l'avant autour dudit premier axe,
- d'autre part entre la position d'utilisation et une position d'accès aux places arrières, par exemple par rabattement partiel dudit dossier vers la position de rabattement.

Un tel siège est usuellement disposé en deuxième rangée du véhicule. Il présente la propriété de s'abaisser lorsque le dossier est rabattu, ce qui libère de l'espace de chargement dans le véhicule.

Le document WO-02/092382 décrit un siège fixé au sol d'un véhicule automobile, ledit siège comprenant une position d'occupation par un passager, une position de rabattement et une position d'accès aux places arrière. En particulier, le siège comprend un élévateur solidaire en rotation du sol du véhicule, un brancard de dossier solidaire en rotation de l'élévateur et un coussin solidaire en rotation du brancard de dossier, ledit brancard de dossier restant immobile par rapport à l'élévateur lorsque le siège est basculé depuis sa position d'utilisation vers sa position d'accès aux places arrière et ledit élévateur restant immobile par rapport au sol du véhicule lorsque le siège est basculé depuis sa position d'occupation vers sa position de rabattement.

Dans les véhicules à trois rangées de sièges, l'accès aux sièges de troisième rangée - dénommés ici places arrières - se fait généralement par les portes situées en regard de la deuxième rangée, en rabattant partiellement vers l'avant, comme décrit ci-dessus, les dossiers de sièges de deuxième rangée.

Or, même après avoir été partiellement rabattu, le dossier ne se place généralement pas suffisamment vers l'avant pour offrir un accès aisé aux places arrières.

L'invention a pour but de pallier cet inconvénient.

On notera que ce qui est décrit ci-dessus peut bien entendu être appliqué au cas de véhicules pourvus seulement de deux portes avant, et pour lesquels on souhaite ménager un accès aux sièges de deuxième rangée qui occupent alors la fonction de places arrières au sens de la description qui suit.

Pour résoudre l'inconvénient sus décrit, l'invention propose un siège de véhicule automobile selon la revendication 1.

On notera que dans cette description, les termes de positionnement dans l'espace (haut, bas, supérieur, transversal, latéral, avant, arrière, vertical, horizontal, dessus,...) sont pris en référence au siège disposé dans le véhicule.

L'agencement proposé permet, lors de la mise en position d'accès aux places arrière, de déplacer le premier axe vers l'avant, ceci du fait de la rotation vers l'avant de la bielle arrière autour du cinquième axe.

En outre, le haut du dossier est lui aussi déplacé vers l'avant.

Il en résulte de ce déplacement du dossier vers l'avant un accès facilité aux places arrière.

D'autres particularités et avantages de l'invention apparaîtront dans la description qui suit, faite en référence aux figures jointes dans lesquelles :

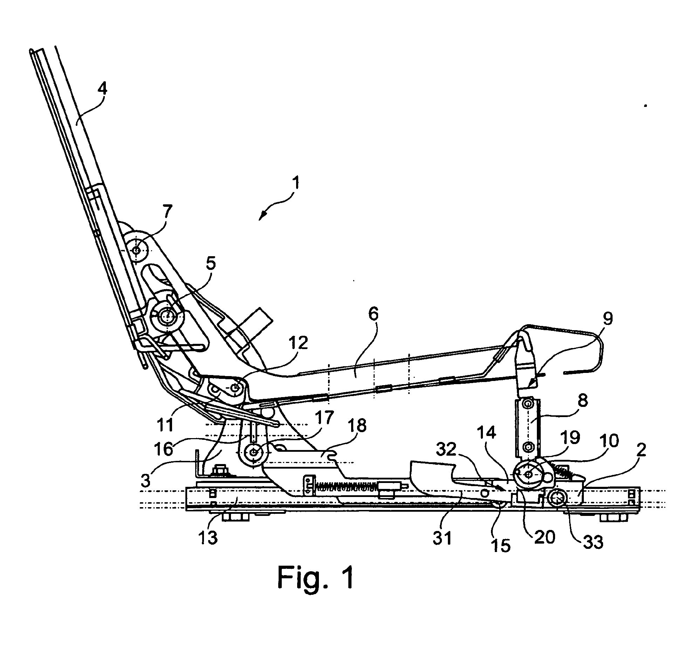

- la figure 1 est une vue schématique latérale d'un siège en position d'utilisation selon une réalisation,

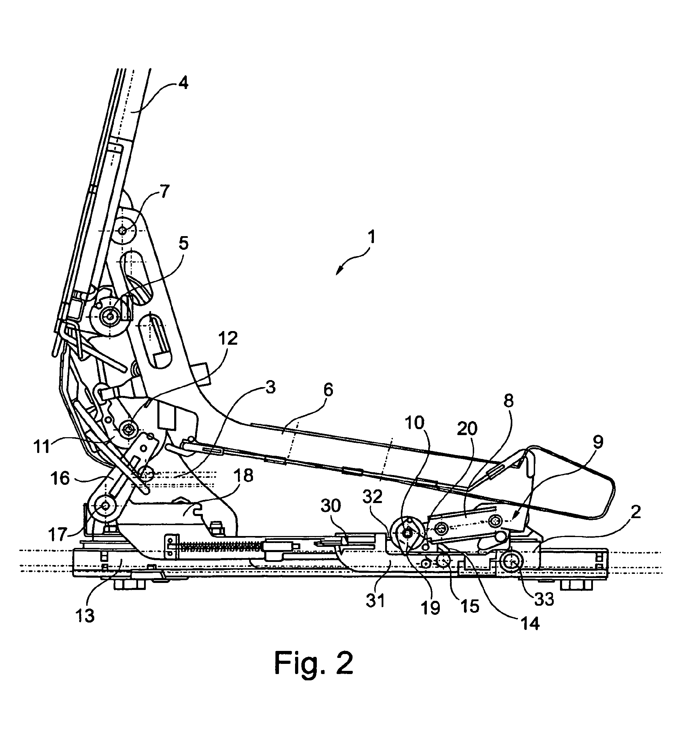

- la figure 2 est une vue schématique du siège de la figure 1 en position d'accès aux places arrières,
- la figure 3 est une vue schématique du siège de la figure 1 en position de rabattement,
- les figures 4 sont des vues latérales partielles de détail du siège des figures 1 à 3 en position d'utilisation ou rabattement (4a), en début de mise en position d'accès aux places arrières (4b) et en un peu avant d'atteindre la position d'accès aux places arrières (4c),
- les figures 5 sont des vues de détail d'un mécanisme d'actionnement du dossier du siège des figures 1 à 3, en position d'utilisation (5a) et en position d'accès aux places arrière (5b).

En référence aux figures, on décrit un siège 1 de véhicule automobile comprenant :
- un support 2 destinée à être fixé solidairement au sol dudit véhicule,
- une embase 3 saillante vers le haut et solidaire de l'arrière dudit support,
- un brancard de dossier 4 monté en rotation solidairement à la partie supérieure de ladite embase selon un premier axe 5 transversal, afin de permettre l'actionnement dudit dossier entre une position sensiblement verticale d'utilisation et une position sensiblement horizontale de rabattement,
- un brancard d'assise 6 monté en rotation par rapport audit brancard de dossier selon un deuxième axe 7 transversal disposé au-dessus dudit premier axe,
- une bielle avant 8 dont les extrémités sont respectivement montées en rotation selon un troisième axe 9 transversal à l'avant dudit brancard d'assise et selon un quatrième axe 10 transversal solidairement à l'avant dudit support,
- une bielle arrière 11 dont les extrémités sont respectivement montées en rotation selon ledit premier axe et selon un cinquième axe 12 disposé en haut de ladite embase, ledit premier axe étant disposé en arrière et au dessus dudit cinquième axe lorsque ledit dossier est en position d'utilisation,
   ledit dossier étant actionnable au moins selon deux modes :
- d'une part entre les positions d'utilisation et de rabattement, ladite bielle arrière étant bloquée en rotation par rapport à ladite embase et ledit brancard de dossier étant actionné en rotation vers l'avant autour dudit premier axe,
- d'autre part entre la position d'utilisation et une position d'accès aux places arrières, ladite bielle arrière étant actionnée en rotation vers l'avant autour dudit cinquième axe et ledit brancard de dossier étant bloqué en rotation par rapport à ladite bielle arrière.

En définitive, le brancard de dossier 4 est monté solidairement à l'embase 3 par l'intermédiaire de la bielle arrière 11 utilisée pour faciliter l'accès aux places arrières.

Selon la réalisation représentée, la bielle avant 8 est montée solidairement à l'avant du support 2 par l'intermédiaire d'une biellette 14 dont les extrémités respectives sont montées en rotation d'une part à ladite bielle avant selon le quatrième axe et d'autre part selon un sixième axe 15 transversal à l'avant dudit support, la bielle arrière 11 présentant une excroissance 16 s'étendant en dessous du cinquième axe 12, l'extrémité libre de ladite excroissance étant articulée en rotation selon un septième axe 17 transversal à une extrémité d'un bras d'actionnement 18, l'autre extrémité dudit bras étant articulée à ladite biellette selon un huitième axe 20 disposé au dessus dudit sixième axe.

Une telle réalisation permet à l'avant de l'assise de plonger vers le bas lors de la mise en position d'accès aux places arrières, ce qui permet de disposer d'un espace supplémentaire de déplacement vers l'avant du siège 1 lors de la mise en position d'accès aux places arrières, ceci du fait de l'inclinaison vers l'arrière des dossiers de sièges avant.

Selon la réalisation représentée, le support 2 est sous la forme d'un rail mobile coulissant sur un rail fixe 13 destiné à être fixé à la structure du véhicule, ledit siège comprenant un moyen réversible de verrouillage 30 dudit rail mobile par rapport audit rail fixe selon une pluralité de positions longitudinales, ledit siège comprenant en outre :
- une came 19 montée en rotation autour du quatrième axe 10, ladite came étant solidaire de la bielle avant 8 de façon à accompagner sa rotation autour dudit quatrième axe,
- un actionneur 31 de déverrouillage réversible dudit moyen de verrouillage, ledit actionneur étant solidaire dudit rail mobile, ledit actionneur étant pourvu d'au moins un suiveur 32 de came, ladite came et ledit suiveur étant respectivement agencés de manière à activer ledit actionneur par la mise du dossier en position de rabattement et/ou d'accès aux places arrières.

Une telle réalisation permet de réaliser un avancement du siège 1 vers l'avant, par coulissement du rail mobile 2 sur le rail fixe 13, ce qui optimise la facilité d'accès aux places arrières.

Selon la réalisation représentée, l'actionneur 31 est monté en rotation sur le rail mobile 2 selon un neuvième axe 33 transversal, ledit actionneur présentant une portion de surface formant suiveur 32.

Selon une réalisation non représentée, le siège 1 comprend en outre un moyen de rappel élastique tendant à désactiver l'actionneur 31 en l'absence de contrainte opposée.

Selon une réalisation non représentée, l'actionneur 31 est relié à un moyen d'activation manipulable par l'utilisateur.

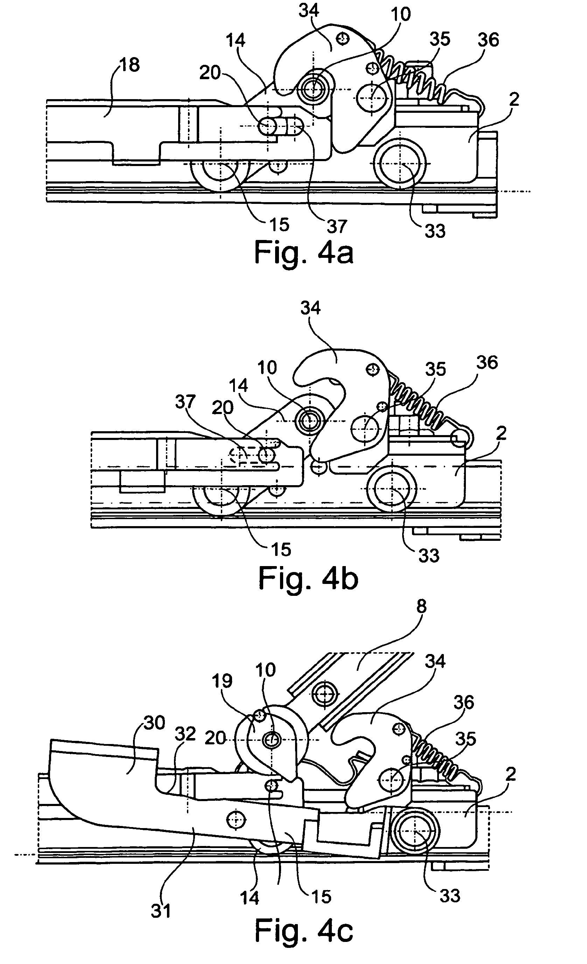

Comme représenté en figures 4, le siège 1 comprend un verrou 34 de blocage du quatrième axe 10, le bras 18 d'actionnement prenant appui contre ledit verrou en positions d'utilisation et de rabattement de manière à l'activer en verrouillage, la mise du siège 1 en position d'accès aux places arrières provoquant un recul dudit bras vers l'arrière supprimant l'appui en désactivant le verrouillage, de manière à permettre la rotation de la biellette 14 autour du sixième axe 15.

Une telle réalisation permet de garantir un bon positionnement du quatrième axe 10 par rapport à sa position nominale lors du passage du siège en position de rabattement.

En effet, lorsque la came 19 entre en appui sur le suiveur 32, une poussée est exercée vers le haut sur le quatrième axe 10.

Et, du fait des dispersions dimensionnelles qui peuvent exister dans les différents composants du siège 1, le quatrième axe 10 peut se déplacer légèrement vers le haut par rapport à sa position nominale, et la biellette 14 de même.

La biellette 14 peut alors ne pas exercer un appui suffisant sur le suiveur 32, avec pour effet de ne pas conduire au déverrouillage attendu du moyen de verrouillage 30, et donc de ne pas permettre la translation du siège 1 vers l'avant.

Le verrou 34 est ici en forme de crochet articulé selon un dixième axe transversal 35 solidairement au support 2, ledit crochet coiffant en verrouillage le quatrième axe 10 par le haut.

Par ailleurs un moyen ressort 36 est disposé de manière à entraîner le verrou 34 vers sa configuration de déverrouillage en l'absence de contrainte.

Lors de la mise en position d'accès aux places arrières, le bras 18 recule de manière à supprimer l'appui dudit bras contre le verrou 34 qui, sous l'effet du moyen ressort 36, se positionne en déverrouillage.

Pour ce faire, le huitième axe 20 est monté coulissant dans une lumière 37 prévue en extrémité du bras 18, ladite lumière permettant de réaliser le déverrouillage du quatrième axe 10 par le verrou 34 avant d'amorcer la rotation de la biellette 14 autour du sixième axe 15.

Selon la réalisation représentée, le déverrouillage du moyen de verrouillage 30 lors de la mise en position d'accès aux places arrières est réalisé lui aussi par la came 19 alors que le quatrième axe 10 n'est plus bloqué par le verrou 34.

En effet, dans cette situation, la came 19 exerce son action à plus grande distance du neuvième axe 33 que lors de la mise en position de rabattement et, de ce fait, la poussée exercée vers le haut sur le quatrième axe 10 est moindre, ce qui justifie l'absence d'un blocage par le verrou 34.

Ceci étant, il peut être prévu, dans un mode de réalisation non représenté, que le déverrouillage du moyen de verrouillage 30, lors de la mise en position d'accès aux places arrières, se fasse autrement qu'au moyen de la came 19.

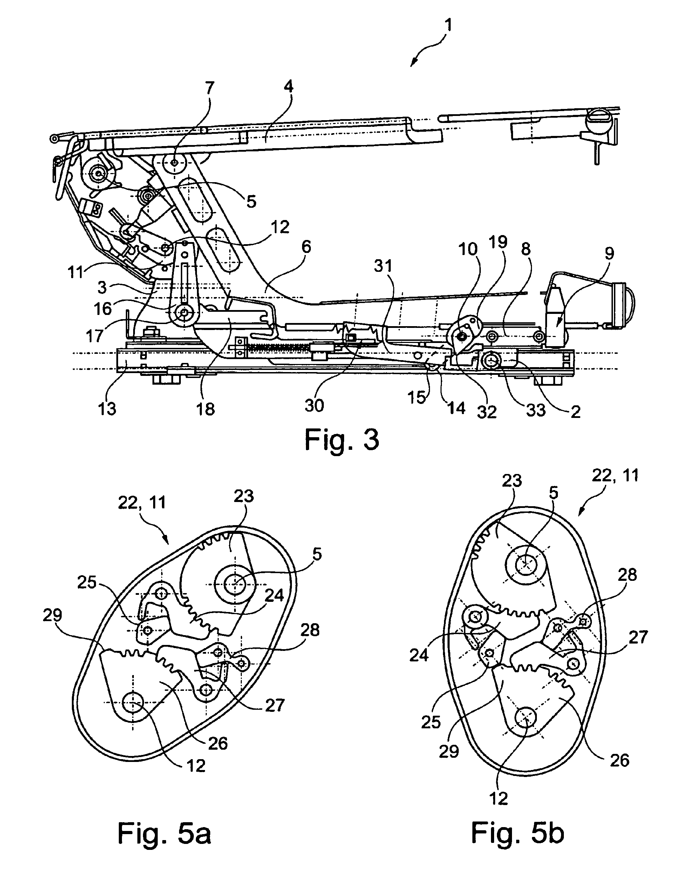

Comme représenté en figures 5, on décrit à présent un mécanisme 22 d'actionnement du dossier, ledit mécanisme comprenant un moyen de blocage 29 activé par positionnement du dossier en position d'accès aux places arrières et agencé pour bloquer l'actionnement dudit dossier vers sa position de rabattement lorsqu'il est en position d'accès aux places arrières.

Le mécanisme 22 du mode de réalisation représenté est intégré dans la bielle arrière 11.

Le mécanisme 22 comprend un premier pignon denté 23 coopérant avec une première pièce de blocage rotative dentée 24 actionnée par un premier organe rotatif 25, l'ensemble permettant de bloquer le dossier dans les positions d'utilisation et de rabattement.

Le mécanisme 22 comprend en outre un deuxième pignon denté 26 coopérant avec une deuxième pièce de blocage rotative dentée 27 actionnée par un deuxième organe rotatif 28, l'ensemble permettant de bloquer le dossier dans les positions d'utilisation et d'accès aux places arrière.

Comme décrit plus haut, le mécanisme 22 comprend un moyen de blocage 29 activé par positionnement du dossier en position d'accès aux places arrières et agencé pour bloquer l'actionnement dudit dossier vers sa position de rabattement lorsqu'il est en position d'accès aux places arrières.

En effet, lorsque le dossier est en position d'accès aux places arrière, une zone du deuxième pignon 26 forme moyen de blocage 29 qui bloque la rotation du premier organe 25, ce qui empêche le désengrenage du premier pignon 23 d'avec la première pièce 24, et bloque le déplacement du dossier vers la position de rabattement.

## Revendications

1. Siège (1) de véhicule automobile comprenant :
• un support (2) destiné à être fixé solidairement au sol dudit véhicule,
• une embase (3) saillante vers le haut et solidaire de l'arrière dudit support,
• un brancard de dossier (4) monté en rotation solidairement à la partie supérieure de ladite embase, par l'intermediaire d'une bielle arrière (11), selon un premier axe (5) transversal, afin de permettre l'actionnement dudit dossier entre une position sensiblement verticale d'utilisation et une position sensiblement horizontale de rabattement,
• un brancard d'assise (6) monté en rotation par rapport audit brancard de dossier selon un deuxième axe (7) transversal disposé au-dessus dudit premier axe,
• une bielle avant (8) dont les extrémités sont respectivement montées en rotation selon un troisième axe (9) transversal à l'avant dudit brancard d'assise et selon un quatrième axe (10) transversal solidairement à l'avant dudit support,
• une bielle arrière (11) dont les extrémités sont respectivement montées en rotation selon ledit premier axe et selon un cinquième axe (12) disposé en haut de ladite embase, ledit premier axe étant disposé en arrière et au dessus dudit cinquième axe lorsque ledit dossier est en position d'utilisation,
ledit dossier étant actionnable au moins selon deux modes :
• d'une part entre les positions d'utilisation et de rabattement, ladite bielle arrière étant bloquée en rotation par rapport à ladite embase et ledit brancard de dossier étant actionné en rotation vers l'avant autour dudit premier axe,
• d'autre part entre la position d'utilisation et une position d'accès aux places arrières, ladite bielle arrière étant actionnée en rotation vers l'avant autour dudit cinquième axe et ledit brancard de dossier étant biloqué en rotation par rapport à ladite bielle arrière,
ledit siège étant **caractérisé en ce que** la bielle avant (8) est montée solidairement à l'avant du support (2) par l'intermédiaire d'une biellette (14) dont les extrémités respectives sont montées en rotation d'une part à ladite bielle avant selon le quatrième axe (10) et d'autre part selon un sixième axe (15) transversal à l'avant dudit support, la bielle arrière (11) présentant une excroissance (16) s'étendant en dessous du cinquième axe (12), l'extrémité libre de ladite excroissance étant articulée en rotation selon un septième axe (17) transversal à une extrémité d'un bras d'actionnement (18), l'autre extrémité dudit bras étant articulée à ladite biellette selon un huitième axe (20) disposé au dessus dudit sixième axe.

2. Siège selon la revendication 1, **caractérisé en ce que** le support (2) est sous la forme d'un rail mobile coulissant sur un rail fixe (13) destiné à être fixé à la structure du véhicule, ledit siège comprenant un moyen réversible de verrouillage (30) dudit rail mobile par rapport audit rail fixe selon une pluralité de positions longitudinales, ledit siège comprenant en outre :
• une came (19) montée en rotation autour du quatrième axe (10), ladite came étant solidaire de la bielle avant (8) de façon à accompagner sa rotation autour dudit quatrième axe,
• un actionneur (31) de déverrouillage réversible dudit moyen de verrouillage, ledit actionneur étant solidaire dudit rail mobile, ledit actionneur étant pourvu d'au moins un suiveur (32) de came, ladite came et ledit suiveur étant respectivement agencés de manière à activer ledit actionneur par la mise du dossier en position de rabattement et/ou d'accès aux places arrières.

3. Siège selon la revendication 2, **caractérisé en ce que** l'actionneur (31) est monté en rotation sur le rail mobile (2) selon un neuvième axe (33) transversal, ledit actionneur présentant une portion de surface formant suiveur (32) et présentant une extrémité pourvue du moyen de verrouillage (30).

4. Siège selon l'une quelconque des revendications 2 ou 3, **caractérisé en ce qu'**il comprend en outre un moyen de rappel élastique tendant à désactiver l'actionneur (31) en l'absence de contrainte opposée.

5. Siège selon l'une quelconque des revendications 2 à 4, **caractérisé en ce que** l'actionneur (31) est relié à un moyen d'activation manipulable par l'utilisateur.

6. Siège selon l'une quelconque des revendications 1 à 5, **caractérisé en ce qu'**il comprend un verrou (34) de blocage du quatrième axe (10), le bras (18) d'actionnement prenant appui contre ledit verrou en positions d'utilisation et de rabattement de manière à l'activer en verrouillage, la mise du siège (1) en position d'accès aux places arrières provoquant un recul dudit bras vers l'arrière supprimant l'appui en désactivant le verrouillage, de manière à permettre la rotation de la biellette (14) autour du sixième axe (15).

7. Siège selon l'une quelconque des revendications 1 à 6, **caractérisé en ce qu'**il comprend un mécanisme (22) d'actionnement du dossier, ledit mécanisme comprenant un moyen de blocage (29) activé par positionnement du dossier en position d'accès aux places arrières et agencé pour bloquer l'actionnement dudit dossier vers sa position de rabattement lorsqu'il est en position d'accès aux places arrières.

## Patentansprüche

1. Kraftfahrzeugsitz (1), umfassend:
- einen Träger (2), der ausgelegt ist, um fest verbunden am Boden des Fahrzeugs befestigt zu sein,
- einen Sockel (3), der nach oben hervorspringt und fest mit der Hinterseite des Trägers verbunden ist,
- einen Rückenlehnenlängsträger (4), der drehbar fest mit dem oberen Teil des Sockels mit Hilfe einer hinteren Kupplungsstange (11) gemäß einer ersten Querachse (5) verbunden ist, um die Betätigung der Rückenlehne zwischen einer im Wesentlichen vertikalen Position der Benutzung und einer im Wesentlichen horizontalen Position des Herunterklappens zu ermöglichen,
- einen Sitzteillängsträger (6), der drehbar mit Bezug auf den Rückenlehnenlängsträger gemäß einer zweiten Querachse (7) montiert ist, die über der ersten Achse angeordnet ist,
- eine vordere Kupplungsstange (8), deren Enden jeweils drehbar gemäß einer dritten Querachse (9) an die Vorderseite des Sitzteillängsträgers und gemäß einer vierten Querachse (10) fest verbunden an die Vorderseite des Trägers montiert sind,
- eine hintere Kupplungsstange (11), deren Enden jeweils drehbar gemäß der ersten Achse und gemäß einer fünften Achse (12) montiert sind, die an der Oberseite des Sockels angeordnet ist, wobei die erste Achse hinter und über der fünften Achse angeordnet ist, wenn sich die Rückenlehne in der Position der Benutzung befindet,
wobei die Rückenlehne mindestens auf zwei Arten betätigt werden kann:
- einerseits zwischen den Positionen der Benutzung und des Herunterklappens, wobei die hintere Kupplungsstange in der Drehung mit Bezug auf den Sockel blockiert ist und der Rückenlehnenlängsträger in der Drehung auf die Vorderseite hin um die erste Achse betätigt wird,
- andererseits zwischen der Position der Benutzung und einer Position des Zugangs zu den hinteren Plätzen, wobei die hintere Kupplungsstange in der Drehung auf die vordere Seite hin um die fünfte Achse betätigt wird, wobei der Rückenlehnenlängsträger in der Drehung mit Bezug auf die hintere Kupplungsstange blockiert ist, wobei der Sitz **dadurch gekennzeichnet ist, dass** die vordere Kupplungsstange (8) fest verbunden an die Vorderseite des Trägers (2) mit Hilfe einer Steuerstange (14) montiert ist, deren jeweilige Enden drehbar einerseits an die vordere Kupplungsstange gemäß der fünften Achse (10) und andererseits gemäß einer sechsten Querachse (15) an die Vorderseite des Trägers montiert sind, wobei die hintere Kupplungsstange (11) einen Vorsprung (16) aufweist, der sich unter der fünften Achse (12) erstreckt, wobei das freie Ende des Vorsprungs drehbar gemäß einer siebten Querachse (17) an ein Ende eines Betätigungsarms (18) gelenkig verbunden ist, wobei das andere Ende des Arms an die Steuerstange gemäß einer achten Achse (20) gelenkig verbunden ist, die über der sechsten Achse angeordnet ist.

2. Sitz nach Anspruch 1, **dadurch gekennzeichnet, dass** der Träger (2) die Form einer beweglichen Schiene aufweist. die auf einer festen Schiene (13) gleitet, die ausgelegt ist, um an die Struktur des Fahrzeugs befestigt zu werden, wobei der Sitz ein umkehrbares Mittel zur Verriegelung (30) der beweglichen Schiene mit Bezug auf die feste Schiene gemäß einer Vielzahl von Längspositionen umfasst, wobei der Sitz außerdem Folgendes umfasst:
- einen Nocken (19), der drehbar um die fünfte Achse (10) montiert ist, wobei der Nocken mit der vorderen Kupplungsstange (8) fest verbunden ist, um seine Drehung um die vierte Achse zu begleiten,
- eine Betätigungsvorrichtung (31) zur umkehrbaren Entriegelung des Verriegelungsmittels, wobei die Betätigungsvorrichtung fest mit der beweglichen Schiene verbunden ist, wobei die Betätigungsvorrichtung mit mindestens einem Nockenfolger (32) ausgestattet ist, wobei der Nocken und der Nockenfolger jeweils derart angeordnet sind, dass sie die Betätigungsvorrichtung durch die Anordnung der Rückenlehne in die Position des Herunterklappens und/oder des Zugangs zu den hinteren Plätzen aktivieren.

3. Sitz nach Anspruch 2, **dadurch gekennzeichnet, dass** die Betätigungsvorrichtung (31) drehbar auf der beweglichen Schiene (2) gemäß einer neunten Querachse (33) montiert ist, wobei die Betätigungsvorrichtung einen Oberflächenabschnitt aufweist, der einen Folger (32) bildet, und ein Ende aufweist, das mit dem Verriegelungsmittel (30) versehen ist.

4. Sitz nach einem der Ansprüche 2 oder 3, **dadurch gekennzeichnet, dass** er außerdem ein Mittel zur elastischen Rückstellung umfasst, das dazu neigt, die Betätigungsvorrichtung (31) bei Abwesenheit einer entgegengesetzten Spannung zu deaktivieren.

5. Sitz nach einem der Ansprüche 2 bis 4, **dadurch gekennzeichnet, dass** die Betätigungsvorrichtung (31) mit einem Betätigungsmittel verbunden ist, das vom Benutzer manipuliert werden kann.

6. Sitz nach einem der Ansprüche 1 bis 5, **dadurch gekennzeichnet, dass** er eine Verriegelung (34) zur Blockierung der vierten Achse (10) umfasst, wobei der Betätigungsarm (18) gegen die Verriegelung in der Position der Benutzung und des Herunterklappens aufliegt, um sie in der Verriegelung zu aktivieren, wobei die Anbringung des Sitzes (1) in der Position des Zugangs zu den hinteren Plätzen einen Rücklauf des Arms nach hinten hervorruft, wodurch die Auflage durch die Deaktivierung der Verriegelung beseitigt wird, um die Drehung der Steuerstange (14) um die sechste Achse (15) zu ermöglichen.

7. Sitz nach einem der Ansprüche 1 bis 6, **dadurch gekennzeichnet, dass** er einen Mechanismus (22) zur Betätigung der Rückenlehne umfasst, wobei der Mechanismus ein Blockierungsmittel (29) umfasst, das durch die Positionierung der Rückenlehne in die Position des Zugangs zu den hinteren Plätzen aktiviert wird und angeordnet ist, um die Betätigung der Rückenlehne in ihre Position des Herunterklappens zu blockieren, wenn sie sich in der Position des Zugangs zu den hintern Plätzen befindet.

## Claims

1. Motor vehicle seat (1) comprising:
- a mount (2) intended to be rigidly connected to the floor of said vehicle,
- an upwardly projecting base plate (3) rigidly connected to the rear of said mount,
- a back section shaft (4) rotatably mounted rigidly connected to the upper part of said base plate by means of a rear connecting rod (11), along a first transversal axis (5), in order to enable the actuation of said back section between a substantially vertical use position and a substantially horizontal folding back position,
- a seat section shaft (6) rotatably mounted in relation to said back section shaft along a second transversal axis (7) arranged above said first axis,
- a front connecting rod (8) wherein the ends are respectively rotatably mounted along a third transversal axis (9) to the front of said seat section shaft and along a fourth transversal axis (10) rigidly connected to the front of said mount,
- a rear connecting rod (11) wherein the ends are respectively rotatably mounted along said first axis and along a fifth axis (12) arranged at the top of said base plate, said first axis being arranged to the rear of and above said fifth axis when said back section is in the use position,
said back section being suitable for actuation according to two modes:
- firstly, between the use and folding back positions, said rear connecting rod being locked in rotation in relation to said base and said back section shaft being actuated in rotation forwards about said first axis,
- secondly, between the use position and a rear seat access position, said rear connecting rod being actuated in rotation forwards about said fifth axis and said back section shaft being locked in rotation in relation to said rear connecting rod,
said seat being **characterised in that** the front connecting rod (8) mounted rigidly connected to the front of the mount (2) by means of a link (14) wherein the respective ends are rotatably mounted firstly on said front connecting rod along the fourth axis (10) and secondly along a sixth transversal axis (15) to the front of said mount, the rear connecting rod (11) having a protuberance (16) extending below the first axis (12), the free end of said protuberance being rotatably hinged along a seventh transversal axis (17) at an end of an actuation arm (18), the other end of said arm being hinged at said link along an eighth axis (20) arranged above said sixth axis.

2. Seat according to claim 1, **characterised in that** the mount (2) is in the form of a movable rail sliding on a fixed rail (13) intended to be attached to the vehicle structure, said seat comprising means (30) for reversibly locking said movable rail in relation to said fixed rail along a plurality of longitudinal positions, said seat further comprising:
- a cam (19) rotatably mounted about the fourth axis (10), said cam being rigidly connected to the front connecting rod (8) so as to follow the rotation thereof about said fourth axis,
- an actuator (31) for reversibly unlocking said locking means, said actuator being rigidly connected to said movable rail, said actuator being provided with at least one cam follower (32), said cam and said follower being respectively arranged so as to activate said actuator by setting the back section to the folding back and/or rear seat access position.

3. Seat according to claim 2, **characterised in that** the actuator (31) is rotatably mounted on the movable rail (2) along a ninth transversal axis (33), said actuator having a surface portion acting as a follower (32) and having an end provided with the locking means (30).

4. Seat according to any of claims 2 or 3, **characterised in that** it further comprises elastic return means tending to deactivate the actuator (31) in the absence of opposite strain.

5. Seat according to any of claims 2 to 4, **characterised in that** the actuator (31) is connected to activation means suitable for handling by the operator.

6. Seat according to any of claims 1 to 5, **characterised in that** it comprises a catch (34) for locking the fourth axis (10), the actuation arm (18) bearing against said catch in the use and folding back positions so as to activate same in locking mode, setting the seat (1) to the rear search access position causing said arm to reverse to the rear, removing the bearing by deactivating locking, so as to enable the rotation of the connecting rod (14) about the sixth axis (15).

7. Seat according to any of claims 1 to 6, **characterised in that** it comprises a mechanism (22) for actuating the back section, said mechanism comprising locking means (29) activated by positioning the back section in the rear seat access position and arranged to lock the actuation of said back section to the folding back position thereof when in the rear seat access position.
